# EUROPEAN PATENT APPLICATION

(11) **EP 4 765 390 A1**
(43) Date of publication of application: **24.06.2026**
(21) Application number: 25211129.9
(22) Date of filing: 24.10.2025
(51) Int. Cl.: H01M 50/209, H01M 50/291, H01M 50/293, H01M 50/593

(54) **BATTERY MODULE**

(30) Priority: 20.12.2024 KR 20240192887
(71) Applicant: SAMSUNG SDI CO., LTD., Yongin-si, Gyeonggi-do 17084 (KR)
(72) Inventor: JUNG, Kangsik, 17084 Yongin-si (KR)
(74) Representative: Marks & Clerk LLP

(57) **Abstract**

A battery module includes battery cells arranged in a first direction, and spacers respectively between respective ones of the battery cells, and including a first spacer defining first openings, and a second spacer overlapping the first spacer along the first direction and defining second openings that are misaligned from the first openings.

## Description

### BACKGROUND

### 1. Field

The present disclosure relates to a battery module.

### 2. Description of the Related Art

Secondary batteries may be charged and discharged, unlike primary batteries, which are not rechargeable. Low-capacity secondary batteries are used in small, portable electronic devices, such as smartphones, feature phones, laptop computers, digital cameras, and camcorders, while large-capacity secondary batteries are widely used as power sources for driving motors in hybrid vehicles, electric vehicles, or the like, and as power storage batteries. These secondary batteries include an electrode assembly including a positive electrode and a negative electrode, a casing accommodating the electrode assembly, and electrode terminals connected to the electrode assembly.

Secondary batteries may experience swelling due to internal chemical reactions that occur inside the batteries, causing the internal gas to be generated or the electrode plates to expand.

The above-described information disclosed in the Background of the disclosure is only intended to improve understanding of the background technology of the present disclosure and may include information that does not constitute the related art technology.

### SUMMARY

Embodiments provide a battery module with improved stability.

However, the aspects of the present disclosure are not limited to those mentioned above, and other aspects of the present disclosure that are not mentioned may be understood by the following description and will be more clearly understood by the embodiments of the present disclosure. It will also be appreciated that the aspects of the present disclosure may be realized by the means and combinations thereof indicated in the claims.

An aspect of the present disclosure provides a battery module including battery cells arranged in a first direction, and spacers respectively between respective ones of the battery cells, and including a first spacer defining first openings, and a second spacer overlapping the first spacer along the first direction and defining second openings that are misaligned from the first openings.

An area ratio of the first openings to the first spacer may be about 15% to about 35%, wherein an area ratio of the second openings to the second spacer is about 15% to about 35%.

The first openings may be spaced at an interval of about 0.5 mm to about 1.5 mm, wherein the second openings are spaced at an interval of about 0.5 mm to about 1.5 mm.

The first openings and the second openings may have a diameter of about 3 mm to about 5 mm.

The first openings and the second openings may be arranged such that rows of the second openings are respectively between rows of the first openings.

Ones of the first openings and the second openings in a central region of the spacers are respectively spaced at intervals that are smaller than intervals at which others of the first openings and the second openings are spaced in an outer region of the spacers.

The first openings and the second openings may be arranged such that columns of the second openings are respectively between columns of the first openings.

A total area of ones of the first openings and the second openings in a central region of the spacers may be larger than a total area of others of the first openings and the second openings in an outer region of the spacers.

Another aspect of the present disclosure provides a battery module including battery cells arranged in a first direction, and spacers respectively between adjacent ones of the battery cells, and including a first spacer defining rows of first openings, and a second spacer defining rows of second openings respectively between the rows of the first openings.

An area ratio of the first openings to the first spacer may be about 15% to about 35%, wherein an area ratio of the second openings to the second spacer is about 15% to about 35%.

Ones of the first openings and the second openings in a central region of the spacers may be spaced at intervals that are smaller than intervals at which others of the first openings and the second openings are spaced in an outer region of the spacers.

A total area of ones of the first openings and the second openings in a central region of the spacers is larger than a total area of others of the first openings and the second openings in an outer region of the spacers.

Columns of the second openings may be respectively between columns of the first openings.

The spacers may include at least one of aerogel or mica.

The spacers may further include a barrier layer at an outermost portion.

Aspects other than those described above will become apparent from the following drawings, claims, and detailed description of the disclosure.

At least some of the above and other features of the invention are set out in the claims.

### BRIEF DESCRIPTION OF THE DRAWINGS

The above and other aspects of certain embodiments of the disclosure will be more apparent from the following description taken in conjunction with the accompanying drawings in which:
FIG. 1 is a perspective view schematically illustrating a battery module according to one or more embodiments;
FIG. 2 is a perspective view schematically illustrating a unit battery cell of the battery module of FIG. 1;
FIG. 3 is a diagram schematically illustrating the battery module of FIG. 1;
FIG. 4 is a plan view schematically illustrating a spacer of FIG. 3;
FIG. 5 is a cross-sectional diagram schematically illustrating the spacer;
FIG. 6 is a front view schematically illustrating the spacer of FIG. 5;
FIG. 7 is a partial diagram schematically illustrating the spacer of FIG. 5;
FIG. 8 is a front view schematically illustrating the spacer;
FIG. 9 is a partial diagram schematically illustrating the spacer of FIG. 8;
FIG. 10 is a front view schematically illustrating the spacer;
FIG. 11 is a front view schematically illustrating the spacer; and
FIG. 12 is a cross-sectional diagram taken along the line A- A' of FIG. 11.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the drawings, the relative sizes of elements, layers, and regions may be exaggerated for clarity and/or descriptive purposes. In other words, because the sizes and thicknesses of elements in the drawings are arbitrarily illustrated for convenience of description, the disclosure is not limited thereto. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "over," "higher," "upper side," "side" (e.g., as in "sidewall"), and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component (e.g., an apparatus, a device, a circuit, a wire, an electrode, a terminal, a conductive film, etc.) is referred to as being "formed on," "on," "connected to," or "(operatively, functionally, or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a transistor, a resistor, an inductor, a capacitor, a diode and/or the like. Accordingly, a connection is not limited to the connections illustrated in the drawings or the detailed description and may also include other types of connections. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XY, YZ, and XZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure." Furthermore, the expression "being the same" may mean "being substantially the same". In other words, the expression "being the same" may include a range that can be tolerated by those of ordinary skill in the art. The other expressions may also be expressions from which "substantially" has been omitted.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

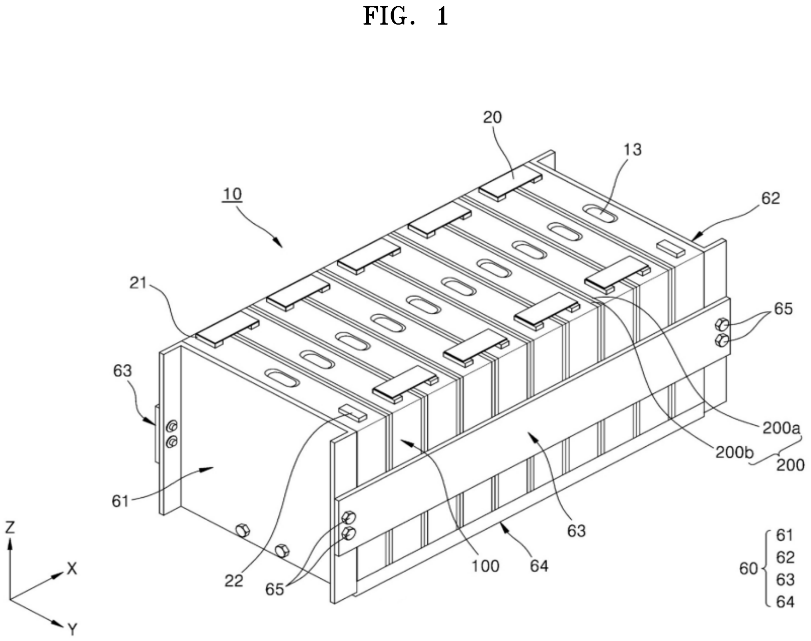

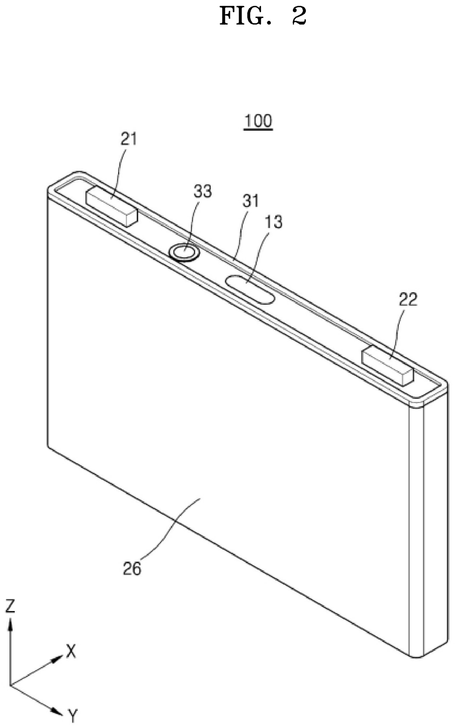

FIG. 1 is a perspective view schematically illustrating a battery module 10 according to one or more embodiments, and FIG. 2 is a perspective view schematically illustrating a unit battery cell 100 of the battery module 10 of FIG. 1.

Referring to FIGS. 1 and 2, a battery module 10 according to the present disclosure may include a plurality of battery cells 100 arranged in a first direction x, and a plurality of spacers 200 arranged respectively between respective adjacent ones of the battery cells 100.

The battery module 10 may include a plurality of battery cells 100 arranged in one direction and each having electrode terminals 21 and 22, and a plurality of bus bars 20 each connecting one battery cell 100 to an adjacent battery cell 100.

The battery cell 100 may include a battery casing, and an electrode assembly and electrolyte accommodated in the battery casing. The electrode assembly and electrolyte electrochemically react with each other to generate energy. One side of the battery cell 100 may be provided with electrode terminals 21 and 22, which are electrically connected to the bus bars 20.

Although the above description illustrates a serial connection, the present disclosure is not limited to this structure, but may adopt various connection structures, as may be suitable. The number and arrangement of battery cells 100 are not limited to the structure illustrated in FIG. 1, and may be changed as may be suitable.

The plurality of battery cells 100 may be arranged in one direction so that the wide surfaces of the battery cells 100 face each other, and the arranged battery cells 100 may be fixed by housings 60. The housings 60 may include a pair of end plates 61 and 62 facing the wide surfaces of the battery cells 100, side plates 63 and a bottom plate 64 connecting the pair of end plates 61 and 62. The side plates 63 may support the sides of the battery cells 100, and the bottom plate 64 may support the bottom surfaces of the battery cells 100. The pair of end plates 61 and 62, side plates 63, and bottom plate 64 may be connected to each other by fastening members, such as bolts 65.

The connection may be performed by any one of soldering, resistance welding, laser welding, or projection welding.

The battery cell 100 may be illustrated as a square lithium-ion secondary battery. However, the present disclosure is not limited thereto, but may be applied to various types of batteries, such as lithium polymer batteries or cylindrical batteries.

As shown in FIG. 2, a can 26 forms the overall exterior of the battery cell 100 and may include a conductive metal, such as aluminum, an aluminum alloy, or nickel-plated steel. The can 26 may provide a space in which the electrode assembly is accommodated.

The battery cell 100 may include a cap plate 31 covering one side edge of the can 26, and the can 26 and the cap plate 31 may include a conductive material. In one or more embodiments, the positive and negative terminals 21 and 22 electrically connected to the positive or negative electrode may be installed to protrude out of the cap plate 31.

In some embodiments, outer surfaces of the upper pillar of the positive and negative terminals 21 and 22 protruding out of the cap plate 31 may be threaded and fixed to the cap plate 31 with nuts. However, the present disclosure is not limited thereto, and the positive and negative terminals 21 and 22 may be provided in a rivet structure so as to be riveted, or may be welded to the cap plate 31.

In some embodiments, the cap plate 31 may be formed from a sheet plate, and may be fastened to one side edge of the can 26.

The battery cell 100 may further include a vent 13. The vent 13 is located on one side of the cap plate 31, and may be provided to be thinner than the notch or the cap plate 31.

If thermal runaway occurs in a battery cell 100, internal gases or the like of the battery cell 100 may be discharged through the vent 13.

In some embodiments, the vent 13 may be provided in a same direction as the electrode terminals 21 and 22 of the battery cell 100.

The spacers 200 are arranged at regular intervals between the battery cells 100, and may have a thickness that may substantially fill the space between the battery cells 100 without leaving any empty space.

The spacers 200 may absorb the pressure generated during swelling of the battery cell 100, and may include a material capable of absorbing shock to protect the battery cell 100.

In some embodiments, the spacers 200 may have an electrical insulating effect, so that no electrical conduction occurs between the battery cells 100 other than the electrical connection by the bus bars 20.

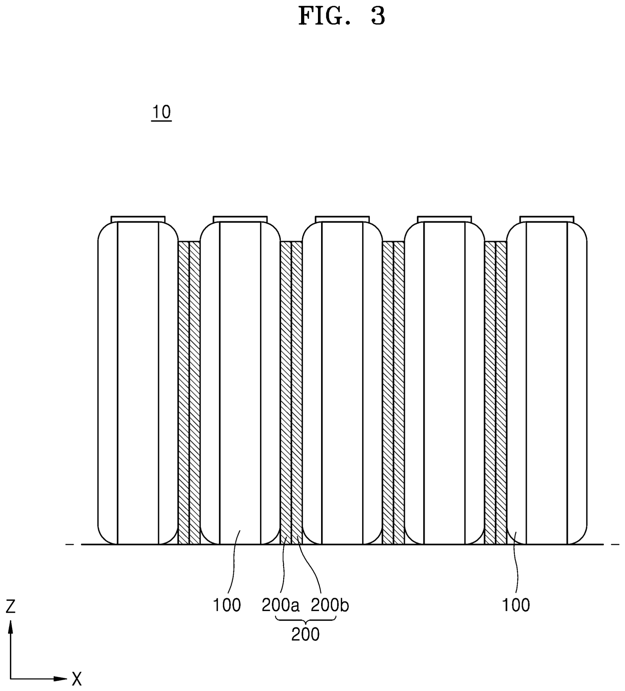

FIG. 3 is a diagram schematically illustrating the battery module of FIG. 1.

Referring to FIG. 3, the spacers 200 may include a first spacer 200a and a second spacer 200b. The first spacer 200a and the second spacer 200b may overlap each other, and may abut against each other, along the first direction x.

The first spacer 200a and the second spacer 200b may be configured to have the same size and thickness. However, the present disclosure is not limited to this, and the first spacer 200a and the second spacer 200b may have different sizes and thicknesses.

Each of the spacers 200 may have elasticity, so the spacers are compressible, and may serve to alleviate the impact caused by the expansion force occurring during swelling of the battery cells 100.

As such, the spacers may sufficiently absorb the swelling expansion force of the battery cells 100.

In some embodiments, the plurality of spacers 200 having sufficient elasticity to support the surfaces of the battery cells 100 more stably during deformation of the battery cells 100 caused by swelling of the battery cells 100, thereby increasing the lifespan of the battery cells 100, and improving the stability of the battery module 10.

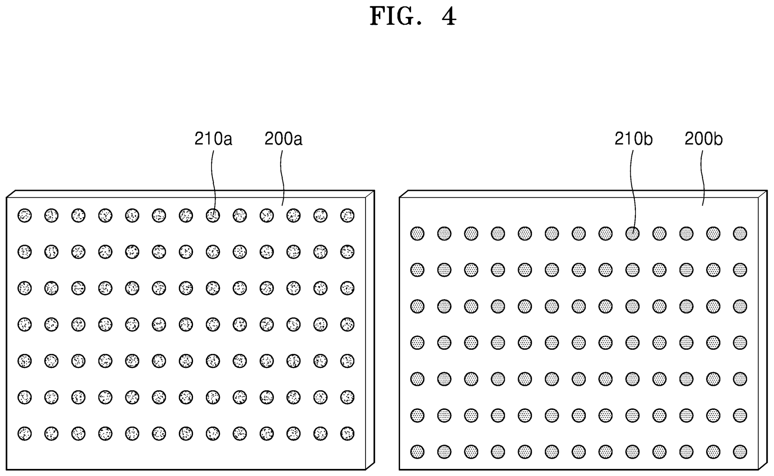

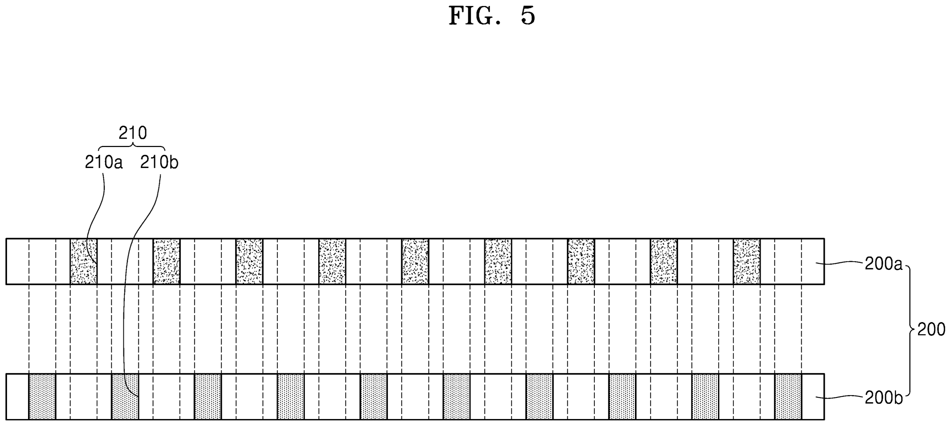

FIG. 4 is a plan view schematically illustrating the spacers of FIG. 3, and FIG. 5 is a cross-sectional view schematically illustrating the spacers.

Referring to FIGS. 4 and 5, each of the spacers 200 may include a first spacer 200a having a plurality of first openings 210a, and a second spacer 200b having a plurality of second openings 210b.

The first spacer 200a has the plurality of first openings 210a, which are provided to be spaced apart at regular intervals from each other without limitation thereto.

In some embodiments, the second spacer 200b is provided such that the plurality of second openings 210b are spaced apart at regular intervals, without limitation thereto.

The first openings 210a and second openings 210b allow for reduced rigidity of the overlapping spacers 200.

Although overlapping of the first spacer 200a and the second spacer 200b increases the elasticity to effectively support deformation between the battery cells 100, the rigidity of the spacers 200 may be excessively increased, so that the pressure applied by the spacers 200 to the battery cells 100 during swelling may be excessively increased.

To solve this problem, the openings 210 may be appropriately distributed to regulate the rigidity of the overlapping spacers 200, and may provide an appropriate pressure between the spacers 200 and the battery cells 100.

In some embodiments, these first openings 210a and second openings 210b are appropriately distributed so that the pressure applied to the battery cells 100 may be maintained at a selectable level or higher.

For example, the spacers 200 may apply a pressure of about 0.3 MPa to about 1.0 MPa to the battery cells 100.

If the pressing is less than about 0.3 MPa, swelling of the battery cells 100 may not be sufficiently absorbed, making it difficult to support the battery cells 100, an uncharged area may occur in the negative electrode, and/or contact resistance may increase due to lifting of the electrode assembly.

If the pressing exceeds about 1.0 MPa, the battery cells 100 may be subjected to excessive pressure through the spacers 200, which may cause cracks to occur in the electrode assembly and lithium plating, thereby reducing the capacity of the battery cells 100.

In some embodiments, the first openings 210a and the second openings 210b may be misaligned from each other.

The battery module 10 may make contact between the battery cells 100 difficult to enable electrical insulation between the battery cells 100.

Because the spacers 200 in the present disclosure not only absorb expansion force caused by deformation during swelling, but also play a role in electrical insulation between battery cells 100, the first openings 210a and the second openings 210b may be configured to be misaligned at different respective positions (e.g., see FIG. 5) so that it is difficult for the battery cells 100 to come into contact with each other.

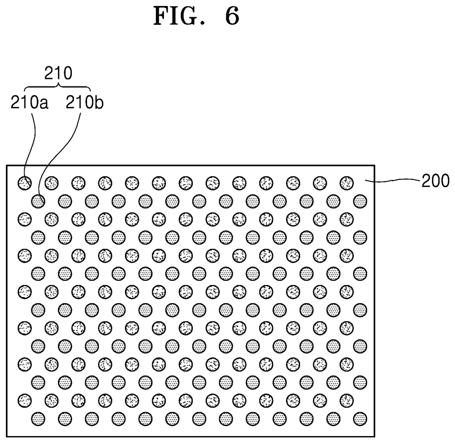

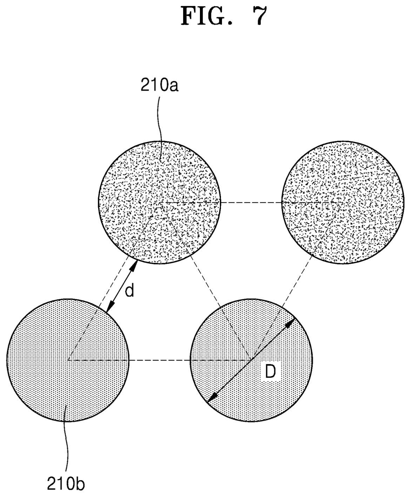

FIG. 6 is a front view schematically illustrating the spacer, and FIG. 7 is a partial view schematically illustrating the spacer of FIG. 6.

Referring to FIGS. 6 and 7, the first openings 210a and the second openings 210b each may be arranged in a plurality of rows so that the second openings 210b are positioned between the plurality of rows of the first openings 210a.

To reduce or prevent the likelihood of the first openings 210a and the second openings 210b overlapping each other, the first openings 210a and the second openings 210b each form a plurality of rows, and the rows of the second openings 210b can be respectively alternately positioned between respective ones of the rows of the first openings 210a.

In some embodiments, the first openings 210a and the second openings 210b may each form a plurality of columns, and the columns of the second openings 210b may be respectively positioned between respective ones of the columns of the first openings 210a.

To evenly arrange the first openings 210a and the second openings 210b over the entire area of the first spacer 200a and the second spacer 200b, the first openings 210a and the second openings 210b may be arranged in multiple rows, respectively, and may be arranged alternately so that the multiple rows do not overlap each other.

Through this, the first openings 210a and the second openings 210b can be arranged to form a triangle based on their respective center points.

In some embodiments, referring to FIG. 7, an interval d between the rows of the first opening 210a and the second opening 210b may be about 0.5 mm to about 1.5 mm.

If the interval d between rows is less than about 0.5 mm, the interval between the first opening 210a and the second opening 210b may be too narrow, so that multiple openings, for example, the first opening 210a and the second opening 210b are within the same area, such that the rigidity of the spacer 200 may become too low, so that sufficient pressing force may not be applied.

In some embodiments, if the interval d between rows exceeds about 1.5 mm, the interval between the first opening 210a and the second opening 210b may be excessively wide, so that a relatively small number of openings 210a and 210b are within the same area, such that the rigidity of the spacer 200 may be excessively high, so that an excessively high pressing force may be applied in a situation, such as expansion of the battery cell 100. The ratio of the total area of the first openings 210a to the first spacer 200a may be about 15% to about 35%, and the ratio of the total area of the second openings 210b to the second spacer 200b may be about 15% to about 35%.

If the ratio of the area of the openings 210 to each spacer 200 is less than about 15%, the openings 210 may not be sufficiently arranged, which may result in the rigidity becoming excessively high, and excessively high pressure may be applied to the battery module 10.

If the ratio of the area of the openings 210 to that of each spacer 200 exceeds about 35%, the ratio occupied by the openings 210 becomes too high, so that the spacers 200 have too low a rigidity, and thus may not be able to apply sufficient pressure if the battery cell 100 is deformed.

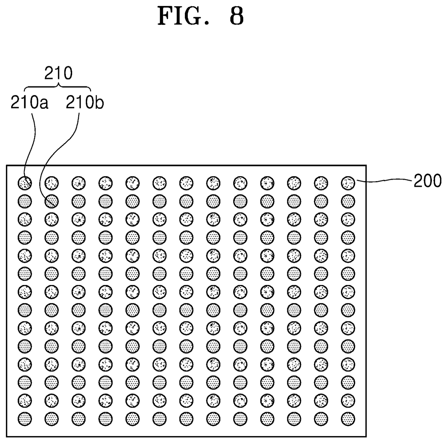

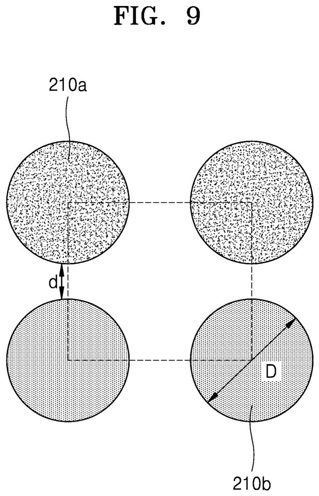

FIG. 8 is a front view schematically illustrating an example of a spacer, and FIG. 9 is a partial view schematically illustrating an example of the spacer of FIG. 8.

Referring to FIGS. 8 and 9, the interval between the first openings 210a may be about 0.5 mm to about 1.5 mm, and the interval between the second openings 210b may be about 0.5 mm to about 1.5 mm.

In some embodiments, the first openings 210a and the second openings 210b each may be arranged in a plurality of columns so that the second openings 210b are positioned between the plurality of columns of the first openings 210a so that the columns of the first openings 210a and the columns of the second openings 210b are arranged alternately.

As such, the first openings 210a and the second openings 210b may be arranged to form a square based on their respective center points.

In some embodiments, the interval d between the openings 210 may be about 0.5 mm to about 1.5 mm.

If the interval d between the openings 210 is less than about 0.5 mm, the openings 210 may be arranged too densely so that the spacers 200 do not have sufficient rigidity, making it difficult to apply pressure to the battery cells 100, and if the interval d between the openings 210 exceeds about 1.5 mm, the spacers 200 may have too high rigidity so that a high pressure may be applied during swelling of the battery cells 100, making it difficult to form a stable battery module 10.

Each of the first openings 210a and the second openings 210b may have a diameter of about 3 mm to about 5 mm.

If a diameter D of the openings 210 is less than about 3 mm, the openings 210 may not be sufficiently large, so that an excessive amount of pressure may be applied to the battery cells 100, and if the diameter of the openings 210 is about 5 mm or more, the openings 210 may be excessively large so that the rigidity of the spacer 200 may be excessively low, possibly making it difficult to sufficiently apply a suitable pressure.

In some embodiments, the diameters of the first opening 210a and the second opening 210b may be the same, but they are not limited thereto.

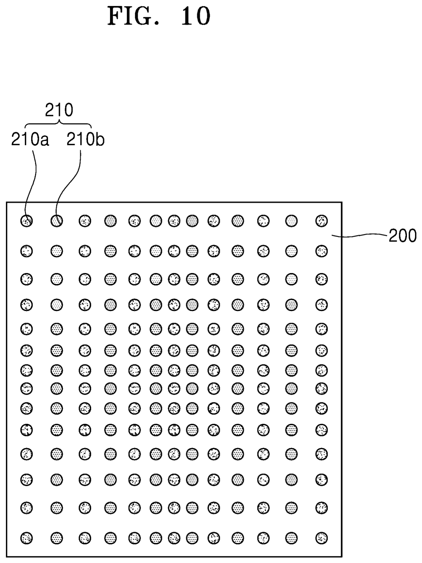

FIG. 10 is a front diagram schematically illustrating the spacer.

Referring to FIG. 10, the first openings 210a and the second openings 210b arranged in the central region of each of the spacers 200 may be spaced at intervals that are smaller than those of the first openings 210a and the second openings 210b arranged in the outer region of each of the spacers 200.

Because the central region of the spacers 200 corresponds to the central region of the battery cell 100, if the battery cell 100 swells, the battery cell 100 may swell from the center, and the central region may receive relatively more pressure than other regions. In response to this, more openings 210 may be made in the central region of the spacers 200 than in the outer region, so that the central region of the battery cell 100 receives relatively less pressure.

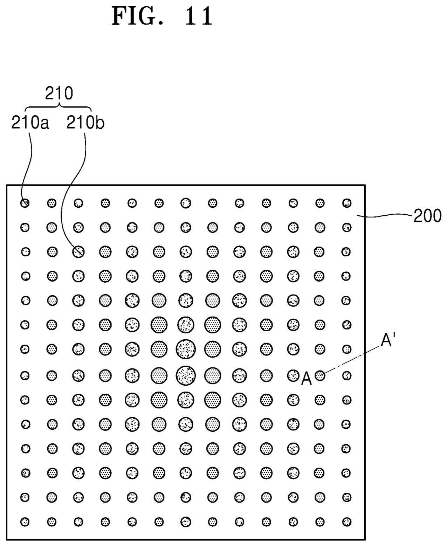

FIG. 11 is a front diagram schematically illustrating the spacer.

Referring to FIG. 11, the total area of, or a diameter of, the first openings 210a and the second openings 210b arranged in the central region of each of the spacers 200 may be larger than the total area of the first openings 210a and the second openings 210b arranged in the outer region of each of the spacers 200.

Because the central region of the spacers 200 corresponds to the central region of the battery cell 100, if the battery cell 100 swells, the battery cell 100 swells from the center, which may be pressed first. To solve this problem, the openings 210 in the central region of the spacers 200 may be larger in total area than the openings 210 in the outer region.

For example, the diameter of the openings 210 in the central region may be larger than the diameter of the openings in the outer region. This allows a wider area of openings 210 to be arranged in the central region, and during swelling of the battery cell 100, allows the central region to secure more accommodation space than the outer region.

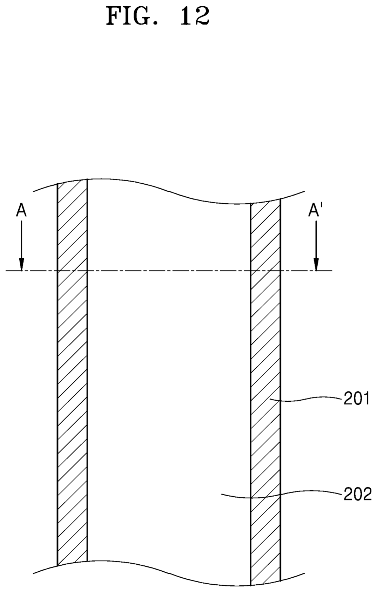

FIG. 12 is a cross-sectional diagram taken along the line A-A' of FIG. 11.

Referring to FIG. 12, in some embodiments, each of the spacers 200 may further include a barrier layer 201 at the outermost portion. The spacer 200 may include an inner layer 202 and a barrier layer 201, and the inner layer 202 may include aerogel or mica. If aerogel is included, there may be difficulties in processing and maintaining the openings 210 due to the lack of rigidity of the aerogel.

To solve this problem, mica or polyethylene terephthalate (PET) may be provided in the barrier layer 201 to offer rigidity to the surface, and may help processing and maintaining of the openings 210.

In some embodiments, the inner layer 202 and the barrier layer 201 may further include, but are not limited to, a material that is heat-resistant and insulating.

The battery module according to the present disclosure may sufficiently absorb the expansion force of the battery during swelling while saving space, thereby improving stability.

Although the foregoing description has illustrated the embodiments with reference to the drawings, these embodiments are merely examples, and those skilled in the art will understand that various modifications and equivalent other embodiments are possible from this. The scope of the present disclosure should be determined by the appended claims, with functional equivalents thereof to be included therein.
Further aspects of the present invention:
1. A battery module comprising:
   a plurality of battery cells arranged in a first direction; and
   spacers arranged between the plurality of battery cells, wherein
   each of the spacers comprises a first spacer having a plurality of first openings and a second spacer having a plurality of second openings,
   the first spacer and the second spacer overlap each other along the first direction, and
   the first openings and the second openings are misaligned from each other.
2. The battery module of clause 1, wherein
   each of the spacers has elasticity.
3. The battery module of clause 1 or clause 2, wherein
   the area ratio of the first openings with respect to the first spacer is 15% to 35%, and the area ratio of the second openings with respect to the second spacer is 15% to 35%.
4. The battery module of any one of clauses 1 to 3, wherein
   the first openings have an interval of 0.5 mm to 1.5 mm, and
   the second openings have an interval of 0.5 mm to 1.5 mm.
5. The battery module of any one of clauses 1 to 4, wherein
   the first openings and the second openings each have a diameter of 3 mm to 5 mm.
6. The battery module of any one of clauses 1 to 5, wherein
   the first openings and the second openings each are arranged in a plurality of rows, and the second openings are positioned between the plurality of rows of the first openings.
7. The battery module of any one of clauses 1 to 6, wherein
   the first openings and the second openings arranged in the central region of each of the spacers respectively have intervals smaller than those of the first openings and the second openings arranged in the outer region of each of the spacers.
8. The battery module of any one of clauses 1 to 7, wherein
   the first openings and the second openings each are arranged in a plurality of columns, and the second openings are positioned between the plurality of columns of the first openings.
9. The battery module of any one of clauses 1 to 8, wherein
   the first spacer and the second spacer abut against each other.
10. The battery module of any one of claims 1 to 9, wherein
   the total area of the first openings and the second openings arranged in the central region of each of the spacers is larger than the total area of the first openings and the second openings arranged in the outer region of each of the spacers.
11. A battery module comprising:
   a plurality of battery cells arranged in a first direction; and
   spacers arranged between the plurality of battery cells,
      each of the spacers comprising a first spacer having a plurality of first openings, and a second spacer having a plurality of second openings,
   wherein the first openings and the second openings each are arranged in a plurality of rows, and
   the second openings are positioned between the plurality of rows of the first openings.
12. The battery module of clause 11, wherein
   each of the spacers has elasticity.
13. The battery module of clause 11 or clause 12, wherein
   the area ratio of the first openings with respect to the first spacer is 15% to 35%, and the area ratio of the second openings with respect to the second spacer is 15% to 35%.
14. The battery module of any one of clauses 11 to 13, wherein
   the first openings and the second openings arranged in the central region of each of the spacers respectively have intervals smaller than those of the first openings and the second openings arranged in the outer region of each of the spacers.
15. The battery module of any one of clauses 11 to 14, wherein
   the total area of the first openings and the second openings arranged in the central region of each of the spacers is larger than the total area of the first openings and the second openings arranged in the outer region of each of the spacers.
16. The battery module of any one of clauses 1 to 151, wherein
   the first spacer and the second spacer overlap and abut against each other along the first direction.
17. The battery module of any one of clauses 11 to 16, wherein
   the first openings and the second openings each are arranged in a plurality of columns, and
   the second openings are positioned between the plurality of columns of the first openings.
18. The battery module of any one of clauses 11 to 17, wherein
   the first openings and the second openings have the same number.
19. The battery module of any one of clauses 11 to 18, wherein
   each of the spacers includes at least one of aerogel or mica.
20. The battery module of clause 19, wherein
   each of the spacers further includes a barrier layer at the outermost portion.

## Claims

1. A battery module comprising:
battery cells arranged in a first direction; and
spacers respectively between adjacent ones of the battery cells, and comprising a first spacer defining first openings, and a second spacer overlapping the first spacer along the first direction and defining second openings that are misaligned from the first openings.

2. The battery module as claimed in claim 1, wherein an area ratio of the first openings to the first spacer is about 15% to about 35%, and
wherein an area ratio of the second openings to the second spacer is about 15% to about 35%.

3. The battery module as claimed in claim 1 or claim 2, wherein the first openings are spaced at an interval of about 0.5 mm to about 1.5 mm, and
wherein the second openings are spaced at an interval of about 0.5 mm to about 1.5 mm.

4. The battery module as claimed in any one of the preceding claims, wherein the first openings and the second openings have a diameter of about 3 mm to about 5 mm.

5. The battery module as claimed in any one of the preceding claims, wherein the first openings and the second openings are arranged such that rows of the second openings are respectively between rows of the first openings.

6. The battery module as claimed in any one of the preceding claims, wherein ones of the first openings and the second openings in an central region of the spacers are respectively spaced at intervals that are smaller than intervals at which others of the first openings and the second openings are spaced in an outer region of the spacers.

7. The battery module as claimed in any one of the preceding claims, wherein the first openings and the second openings are arranged such that columns of the second openings are respectively between columns of the first openings.

8. The battery module as claimed in any one of the preceding claims, wherein a total area of ones of the first openings and the second openings in a central region of the spacers is larger than a total area of others of the first openings and the second openings in an outer region of the spacers.

9. A battery module comprising:
battery cells arranged in a first direction; and
spacers respectively between respective ones of the battery cells, and comprising a first spacer defining rows of first openings, and a second spacer defining rows of second openings respectively between the rows of the first openings.

10. The battery module as claimed in claim 9, wherein an area ratio of the first openings to the first spacer is about 15% to about 35%, and
wherein an area ratio of the second openings to the second spacer is about 15% to about 35%.

11. The battery module as claimed in claim 9 or claim 10, wherein ones of the first openings and the second openings in a central region of the spacers are spaced at intervals that are smaller than intervals at which others of the first openings and the second openings are spaced in an outer region of the spacers.

12. The battery module as claimed in any one of claims 9 to 11, wherein a total area of ones of the first openings and the second openings in a central region of the spacers is larger than a total area of others of the first openings and the second openings in an outer region of the spacers.

13. The battery module as claimed in any one of claims 9 to 12, wherein columns of the second openings are respectively between columns of the first openings.

14. The battery module as claimed in any one of claims 9 to 13, wherein the spacers comprise at least one of aerogel or mica.

15. The battery module as claimed in claim 14, wherein the spacers further comprise a barrier layer at an outermost portion.
